# EUROPÄISCHE PATENTSCHRIFT

(11) **EP 2 025 538 B1**
(45) Veröffentlichungstag und Bekanntmachung des Hinweises auf die Patenterteilung: **20.02.2013**
(21) Anmeldenummer: 08012640.2
(22) Anmeldetag: 12.07.2008
(51) Int. Cl.: B60H 1/00, B60H 1/32, B60P 3/20

(54) **Antriebsstrang mit einer Verbrennungskraftmaschine und einem Elektromotor**
Drive train with a combustion engine and an electric motor
Train d'entraînement avec un moteur à combustion et un moteur électrique

(30) Priorität: 13.08.2007 DE 102007038235
(43) Veröffentlichungstag der Anmeldung: 18.02.2009
(73) Patentinhaber: Voith Patent GmbH, 89522 Heidenheim (DE)
(72) Erfinder: Adleff, Kurt, 74564 Crailsheim (DE); Kley, Markus, Dr., 73479 Ellwangen (DE); Hoffeld, Harald, 74564 Crailsheim (DE); Adams, Werner, 74564 Crailsheim (DE); Pittius, Reinhold, Dr., 74564 Crailsheim (DE)
(74) Vertreter: Weitzel, Wolfgang

(56) Entgegenhaltungen:
- EP-A- 1 571 023
- DE-U1- 20 006 009
- JP-A- 2000 105 045
- US-A1- 2006 107 920

## Beschreibung

Die vorliegende Erfindung betrifft einen Antriebsstrang mit einer Verbrennungskraftmaschine, einem Elektromotor und einem Nebenaggregat, das wahlweise mit der Verbrennungskraftmaschine und dem Antriebsmotor angetrieben werden kann. Das Nebenaggregat ist beispielsweise ein Kühlkompressor eines Kühlaggregats insbesondere für einen Kühlraum zur Aufnahme von Kühlgut oder Gefriergut, wobei das Kühlaggregat beziehungsweise der Kühlraum beispielsweise in einem Kühlfahrzeug, insbesondere abnehmbar montiert sein kann.

Solche Kühlfahrzeuge, wie sie die vorliegende Erfindung gemäß einer Ausführungsform betrifft, werden zum Beispiel mit einem Kühlcontainer ausgestattet, der von dem Fahrzeug abnehmbar ist und somit getrennt von dem Fahrzeug zusammen mit dem darin enthaltenen Kühlgut oder Gefriergut transportiert werden kann. Um die Kühlkette des im Kühlcontainer befindlichen Guts, beispielsweise Lebensmittel, aufrechtzuerhalten, wenn der Kühlcontainer getrennt von dem Fahrzeug - zum Beispiel einem Lkw - transportiert wird, beispielsweise auf einem Schiff, ist der Kühlkompressor am oder im Kühlcontainer montiert und mit einem Elektromotor, der ebenfalls am oder im Kühlcontainer montiert ist, elektrisch antreibbar. Die notwendige elektrische Energie kann durch einen im oder am Kühlcontainer vorgesehenen elektrischen Energiespeicher zur Verfügung gestellt werden oder von außen zugeführt werden. In der Regel ist zwar auch die Verbrennungskraftmaschine zum Antrieb des Kühlkompressors am oder im Kühlcontainer montiert und wird zusammen mit diesem von dem Fahrzeug entfernt und transportiert. Jedoch erzeugt der Verbrennungsmotor Abgase, was bei dem getrennten Transport des Kühlcontainers, beispielsweise auf dem Schiff, nicht zulässig ist.

Wenn hingegen der Kühlcontainer zusammen mit dem Kühlkompressor auf einem Kraftfahrzeug (beziehungsweise einem Anhänger desselben) transportiert wird, wobei vorliegend unter Kraftfahrzeug sowohl nicht schienengebundene Landfahrzeuge als auch schienengebundene Fahrzeuge verstanden werden, so kann der Kühlkompressor mittels der dafür vorgesehenen Verbrennungskraftmaschine, in der Regel einem (kleinen) Dieselmotor, der zusätzlich zu einem (großen) Dieselmotor beziehungsweise allgemein Verbrennungsmotor zum Antrieb des Kraftfahrzeugs vorgesehen ist, angetrieben werden. Hierzu muss über eine geeignete Kupplung eine Triebverbindung zwischen der Verbrennungskraftmaschine und dem Kühlkompressor hergestellt werden. Der Elektromotor hingegen wird in der Regel in einer ständigen Drehverbindung, das heißt frei von einer Trennkupplung, mit dem Kühlkompressor vorgesehen.

EP 1 571 023 A1 beschreibt einen Klimaanlagenkühlkreislauf, der wahlweise mittels einer Verbrennungskraftmaschine oder einem Elektromotor antreibbar Ist, umfassend einen Kompressor, einen Expander, einen Verdampfer und einen Verflüssiger. Ein solches wahlweises Antreiben wird mittels einer Leistungsübertragungseinrichtung erzielt, umfassend zwei Kupplungen, die eine Triebverbindung zwischen dem Elektromotor und dem Nebenaggregat sowie eine Triebverbindung zwischen der Verbrennungskraftmaschine und dem Nebenaggregat ermöglicht. Die Kupplungen sind dabei als einzelne Kupplungen ausgeführt. Weiterhin ist ein zusätzlicher Generator vorgesehen, der mittels der Verbrennungskraftmaschine angetrieben werden kann, um durch die somit erzeugte Energie den Elektromotor anzutreiben. Die Verbrennungskraftmaschine und der Elektromotor sind somit nicht in direkte Triebverbindung miteinander bringbar.

Prinzipiell ist es auch möglich, den Kühlkompressor mittels der Verbrennungskraftmaschine, in der Regel einem Dieselmotor, der zum Antrieb des Kraftfahrzeugs dient, anzutreiben, beispielsweise über einen Nebenabtrieb des Wechselgetriebes des Kraftfahrzeugs. Wenn es sich gemäß einer Ausführungsform der vorliegenden Erfindung um ein anderes Nebenaggregat als einen Kühlkompressor handelt, das mittels der Verbrennungskraftmaschine und dem Elektromotor wahlweise angetrieben werden soll, so kann dies auch bevorzugt ausgeführt werden. Wenn es sich jedoch um einen Kühlkompressor als Nebenaggregat handelt, wird, wie dargestellt, in der Regel eine im Vergleich zu dem Antriebsmotor des Kraftfahrzeugs kleinere Verbrennungskraftmaschine zusätzlich vorgesehen werden, um den Kühlkompressor anzutreiben, insbesondere wenn nicht genügend elektrische Energie zum Antriebs des Kühlkomprossors mittels dem Elektromotor zur Verfügung steht oder wenn das Fahrzeug steht oder der Kühlkompressor zusammen mit seinen Antriebsmotoren getrennt vom Fahrzeug transportiert wird.

Herkömmlich erfolgt der Antrieb des Kühlkompressors entweder ausschließlich mit der Verbrennungskraftmaschine oder dem Elektromotor. Der Elektromotor weist als einzige Funktion den wahlweisen Antrieb des Kühlkompressors und gegebenenfalls eines Lüfters und Gebläses des Kühlaggregats auf.

Ein Nachteil bei den bekannten Ausführungen liegt darin, dass zum Antrieb des Kühlkompressors beziehungsweise allgemein einer Arbeitsmaschine beziehungsweise eines Nebenaggregats eines Kraftfahrzeugs, wobei das Nebenaggregat aus bestimmten Gründen durch zwei verschiedene Antriebsmaschinen antreibbar sein muss, zusätzlich ein vergleichsweise aufwendiger und kostenintensiver Elektromotor vorgesehen werden muss. Dabei ergeben sich je nach Nutzung des Kraftfahrzeugs im Laufe seines Lebens solche Fälle, bei denen der Elektromotor vergleichsweise selten angetrieben wird und somit das Verhältnis des Aufwands des zusätzlich vorzusehenden Elektromotors zum Nutzen äußerst gering ist.

Der Erfindung liegt die Aufgabe zugrunde, einen Antriebsstrang, insbesondere in einem Kraftfahrzeug, der eingangs genannten Art und ein Verfahren zum Betreiben dieses Antriebsstrangs anzugeben, die eine bessere Nutzung des Elektromotors ermöglichen und die genannten Nachteile vermeiden.

Die erfindungsgemäße Aufgabe wird durch einen Antriebsstrang mit den Merkmalen von Anspruch 2 und 3 und ein Verfahren mit den Merkmalen von Anspruch 10 gelöst. Die abhängigen Ansprüche beschreiben vorteilhafte und besonders zweckmäßige Ausgestaltungen der Erfindung.

Der erfindungsgemäße Antriebsstrang, der insbesondere in einem Kraftfahrzeug vorgesehen ist, wobei das Kraftfahrzeug insbesondere ein Kühlfahrzeug mit einem Kühlkompressor als anzutreibendes Nebenaggregat ist, weist eine Verbrennungskraftmaschine und einen Elektromotor auf, wobei die Verbrennungskraftmaschine zusätzlich zum Antriebsaggregat des Kraftfahrzeugs vorgesehen ist. Ferner ist ein Nebenaggregat vorgesehen, welches wahlweise in eine Triebverbindung mit der Verbrennungskraftmaschine und dem Elektromotor schaltbar ist, um mechanisch mit der Verbrennungskraftmaschine oder dem Elektromotor angetrieben zu werden. Das Nebenaggregat ist beispielsweise ein Kühlkompressor eines Kühlaggregats, letzteres gegebenenfalls mit Lüfter und Gebläse, die insbesondere ebenfalls mit dem Elektromotor angetrieben werden.

In die Triebverbindung ist eine Doppelkupplung geschaltet. Diese Doppelkupplung ist dabei sowohl in der Triebverbindung zwischen der Verbrennungskraftmaschine und dem Nebenaggregat als auch in der Triebverbindung zwischen dem Elektromotor und dem Nebenaggregat angeordnet und weist wenigstens drei oder genau drei Leistungsschnittstellen zum Übertragen von mechanischer Antriebsleistung auf. Durch die erste Leistungsschnittstelle verläuft die Triebverbindung von der beziehungsweise zu der Verbrennungskraftmaschine, das heißt die Verbrennungskraftmaschine ist an dieser ersten Schnittstelle angeschlossen. An der zweiten Schnittstelle ist entsprechend der Elektromotor angeschlossen, um über die zweite Schnittstelle Antriebsleistung in die Doppelkupplung einzuleiten oder vorteilhaft auch aus der Doppelkupplung aufzunehmen. An der dritten Schnittstelle ist das Nebenaggregat, insbesondere der Kühlkompressor, angeschlossen, um mit Antriebsleistung aus der Doppelkupplung, welche in die Doppelkupplung mittels der Verbrennungskraftmaschine oder dem Elektromotor eingeleitet wird, aufzunehmen.

Die Doppelkupplung weist genau zwei unabhängig voneinander betätigbare Kupplungen auf, wobei mit der ersten Kupplung die Triebverbindung zwischen der Verbrennungskraftmaschine und dem Nebenaggregat wahlweise herstellbar oder unterbrechbar ist, und mit der zweiten Kupplung die Triebverbindung zwischen dem Elektromotor und dem Nebenaggregat wahlweise herstellbar oder unterbrechbar ist, wobei mit den beiden Kupplungen zugleich die Triebverbindung zwischen der Verbrennungskraftmaschine und dem Elektromotor wahlweise herstellbar oder unterbrechbar ist.

Die Doppelkupplung ist vorteilhaft mit einem diese umschließenden Gehäuse versehen, innerhalb von welchem die beiden unabhängig voneinander betätigbaren Kupplungen angeordnet sind. Beispielsweise laufen alle Kupplungshälften, welche jeweils zum Schließen der Kupplung in eine Triebverbindung miteinander bringbar sind, mit einer nur um den Betrag eines möglichen Kupplungsschlupfes verschiedenen Drehzahl um, das heißt zwischen den Kupplungshälften ist kein Übersetzungsgetriebe, beispielsweise Riemengetriebe oder Zahnradgetriebe, vorgesehen. Vorteilhaft umfassen beide Kupplungen eine gemeinsame Kupplungshälfte, so dass insgesamt drei Kupplungshälften ausgebildet werden.

Besonders vorteilhaft ist die Doppelkupplung als hydrodynamische Kupplung ausgeführt, welche wenigstens zwei und insbesondere genau zwei unabhängig voneinander befüllbare und entleerbare Arbeitsräume aufweist. Jeder Arbeitsraum dient zur hydrodynamischen Leistungsübertragung von Antriebsleistung mittels einem Arbeitsmediumkreislauf. Wie bekannt, wird zur Herstellung dieses Arbeitsmediumkreislaufs das Arbeitsmedium, bei Vorsehen eines torusförmigen Arbeitsraums, der zwischen einem Pumpenrad und einem Turbinenrad ausgebildet ist, im Pumpenrad radial nach außen beschleunigt und im Turbinenrad radial nach innen verzögert, so dass Antriebsleistung beziehungsweise Drehmoment mit dem Arbeitsmediumkreislauf vom Pumpenrad auf das Turbinenrad übertragen wird. Mittels des ersten Arbeitsraums wird die erste Kupplung der Doppelkupplung gebildet, und mittels des zweiten Arbeitsraums wird die zweite Kupplung der Doppelkupplung gebildet. Durch Entleeren eines Arbeitsraums wird die entsprechende Kupplung geöffnet, so dass die Triebverbindung von dem jeweiligen Pumpenrad auf das jeweilige Turbinenrad unterbrochen ist, und durch Befüllen, insbesondere vollständiges Befüllen des Arbeitsraums, wird die Kupplung geschlossen, so dass die entsprechende Triebverbindung vom Pumpenrad auf das Turbinenrad hergestellt wird.

Die beiden Arbeitsräume können in Axialrichtung der hydrodynamischen Kupplung, wobei die Axialrichtung entlang oder parallel zu der Drehachse der hydrodynamischen Kupplung verläuft, hintereinander angeordnet sein. Insbesondere kann die hydrodynamische Kupplung dann drei Schaufelräder aufweisen, wobei ein mittleres Schaufelrad mit einer Back-to-back-Anordnung von zwei Beschaufelungen in Axialrichtung zwischen zwei äußeren Schaufelrädern mit jeweils einer, dem mittleren Schaufelrad zugewandten Beschaufelung eingeschlossen wird. Alternativ können die Arbeitsräume auch in Radialrichtung der hydrodynamischen Kupplung hintereinander angeordnet sein. Somit umschließt der radial äußere Arbeitsraum den radial inneren Arbeitsraum, und beide Arbeitsräume können durch insgesamt nur zwei Schaufelräder mit jeweils zwei Beschaufelungen gebildet werden.

Wenn die Doppelkupplung als hydrodynamische Kupplung mit zwei Arbeitsräumen ausgeführt ist, so können, wie dargestellt, Maßnahmen getroffen werden, um die Arbeitsräume unabhängig voneinander zu befüllen und zu entleeren. Ein entleerter Arbeitsraum ermöglicht einen Freilauf zwischen den beiden Kupplungshälften, die den Arbeitsraum gemeinsam ausbilden. Ein befüllter Arbeitsraum führt zu einer hydrodynamischen Koppelung der beiden Kupplungshälften, welche den Arbeitsraum gemeinsam ausbilden, wobei Antriebsleistung beziehungsweise ein Drehmoment zwischen den beiden Kupplungshälften hydrodynamisch übertragen wird.

Gemäß einer alternativen Ausführungsform kann eine Freilauffunktion auch dadurch erreicht werden, dass die beiden sich gegenüberstehenden Beschaufelungen in einem Arbeitsraum, in einem Schnitt in Umfangsrichtung durch die hydrodynamische Kupplung gesehen, schräg und somit nicht senkrecht gegenüber einer Ebene durch den Trennspalt zwischen den beiden Beschaufelungen beziehungsweise Schaufelrädern angeordnet sind. Vorzugsweise ist die Schrägstellung der Schaufeln in zwei in Axialrichtung der hydrodynamischen Kupplung hintereinander angeordneten Arbeitsräumen entgegengesetzt zueinander ausgeführt, so dass bei dem (hydrodynamischen) Antrieb einer gemeinsamen mittleren Kupplungshälfte die Schaufeln des ersten angrenzenden Arbeitsraums hinsichtlich der Relativbewegung zwischen den Schaufelrädern fliehend und jene des zweiten angrenzenden Arbeitsraums spießend zueinander angeordnet sind. Fliehend bedeutet dabei, wie dem Fachmann bekannt ist, dass die Schaufeln des treibenden Schaufelrads entgegen der Drehrichtung schräggestellt sind, wohingegen die Schaufeln des hydrodynamisch angetriebenen Schaufelrads in Drehrichtung, vorzugsweise parallel zu den Schaufeln des treibenden Schaufelrads, angeordnet sind. Spießend bedeutet, dass die Schaufeln des treibenden Schaufelrads in Drehrichtung schräg gestellt sind, wohingegen die Schaufeln des hydrodynamisch angetriebenen Schaufelrads entgegen der Drehrichtung schräggestellt sind, vorzugsweise parallel zu den Schaufeln des treibenden Schaufelrads.

Selbstverständlich ist es möglich, auch eine solche Doppelkupplung in der Form mit zwei schrägbeschaufelten hydrodynamischen Kupplungen befüll- und entleerbar auszuführen. Bei dieser Art von Kupplung ist es jedoch auch möglich, eine Freilauffunktion bei Ausführungen, in welchen beide Arbeitsräume stets mit Arbeitsmedium befüllt sind, insbesondere mit derselben Arbeitsmediummenge, zu erreichen.

Gemäß dem erfndungsgemäßen Verfahren wird in einem ersten Betriebszustand die Triebverbindung zwischen der Verbrennungskraftmaschine und dem Nebenaggregat mittels der ersten Kupplung, insbesondere durch Befüllen des ersten Arbeitsraums der hydrodynamischen Kupplung, oder mittels beiden Kupplungen zugleich, hergestellt, und das Nebenaggregat wird mittels der Verbrennungskraftmaschine angetrieben. In einem zweiten Betriebszustand wird die Triebverbindung zwischen dem Elektromotor und dem Nebenaggregat wenigstens mittels der zweiten Kupplung, insbesondere durch Befüllen des zweiten Arbeitsraums der hydrodynamischen Kupplung, oder mittels beiden Kupplungen zugleich, hergestellt, und das Nebenaggregat wird mittels des Elektromotors angetrieben. In einem dritten Betriebszustand wird die Triebverbindung zwischen der Verbrennungskraftmaschine und dem Elektromotor mittels der ersten Kupplung, insbesondere durch Befüllen des ersten Arbeitsraums der hydrodynamischen Kupplung, und/oder der zweiten Kupplung, insbesondere durch Befüllen des zweiten Arbeitsraums der hydrodynamischen Kupplung, hergestellt, und entweder wird der Elektromotor generatorisch mittels der Verbrennungskraftmaschine angetrieben, wobei die vom Elektromotor erzeugte elektrische Energie insbesondere zur Versorgung von elektrischen Verbrauchern des Fahrzeugs, insbesondere Kraftfahrzeugs, verwendet wird oder in einem Energiespeicher gespeichert wird, oder die Verbrennungskraftmaschine wird mittels des Elektromotors angetrieben, entweder um zusätzlich Antriebsleistung für von der Verbrennungskraftmaschine angetriebene Einrichtungen zur Verfügung zu stellen oder um die Verbrennungskraftmaschine mittels des Elektromotors anzulassen.

Bekanntlich weist jede Verbrennungskraftmaschine ein bestimmtes Motorkennfeld auf, welches Bereiche mit vergleichsweise kleinerem Wirkungsgrad aufweist, das heißt, in denen der Kraftstoffverbrauch pro erzeugter Kilowattstunde Antriebsleistung vergleichsweise hoch ist, und Bereiche mit vergleichsweise größerem Wirkungsgrad, das heißt Bereiche, in denen der Kraftstoffverbrauch pro erzeugter Kilowattstunde vergleichsweise geringer ist. Dieser Kraftstoffverbrauch pro erzeugter Kilowattstunde der Verbrennungskraftmaschine wird auch als spezifischer Kraftstoffverbrauch bezeichnet.

Bei der erfindungsgemäßen Ausführung des Antriebsstrangs ist es nun möglich, den Arbeitspunkt der Verbrennungskraftmaschine dadurch zu verschieben, dass mit dem Elektromotor eine zusätzliche Last (neben der Last, die durch die von der Verbrennungskraftmaschine angetriebenen Nebenaggregate beziehungsweise - falls es sich bei der Verbrennungskraftmaschine um den Antriebsmotor des Fahrzeugs handelt - durch den Antrieb des Fahrzeugs an der Verbrennungskraftmaschine anliegt) auf die Verbrennungskraftmaschine aufgebracht wird. Es ist somit möglich, in solchen Betriebszuständen, in welchen die Verbrennungskraftmaschine aufgrund einer "zu kleinen" anliegenden Last in einem ungünstigen Arbeitspunkt mit einem vergleichsweise geringen Wirkungsgrad arbeitet, den Arbeitspunkt durch Aufbringen der zusätzlichen Last mit dem Elektromotor derart zu verschieben, dass der Wirkungsgrad erhöht wird. Die dabei durch den Elektromotor erzeugte elektrische Energie kann direkt zum Antrieb elektrischer Aggregate verwendet werden oder in einem Energiespeicher (beispielsweise Akkumulator) gespeichert werden, um später den Elektromotor oder andere elektrische Aggregate anzutreiben. Obwohl somit durch die Verschiebung des Arbeitspunktes der Verbrennungskraftmaschine der augenblickliche absolute Kraftstoffverbrauch möglicherweise erhöht wird, wird über eine längere Zeit beziehungsweise auf das Betriebsprofil der Verbrennungskraftmaschine gesehen der Gesamtkraftstoffverbrauch beziehungsweise der durchschnittliche Kraftstoffverbrauch gesenkt.

Wie in der Beschreibungseinleitung zu herkömmlichen Kühlfahrzeugen dargestellt worden ist, kann auch erfindungsgemäß der Antriebsstrang in einem Fahrzeug mit einem abnehmbaren Kühlcontainer beziehungsweise in oder an dem Kühlcontainer, der getrennt von dem Fahrzeug transportierbar ist, vorgesehen sein. Vorteilhaft ist dann auch die Doppelkupplung sowie der Elektromotor und insbesondere die Verbrennungskraftmaschine Bestandteil des abnehmbaren Containers.

Die Erfindung soll nachfolgend anhand von Ausführungsbeispielen und den Figuren exemplarisch beschrieben werden.

Es zeigen:
- Figuren 1 bis 3: verschiedene Möglichkeiten der Anbindung von Verbrennungsmotor, Elektromotor und Nebenaggregat an der Doppelkupplung;
- Figuren 4a, 4b: mögliche Ausführungsformen einer hydrodynamischen Kupplung als Doppelkupplung für einen erfindungsgemäßen Antriebsstrang;
- Figur 5: eine alternative Ausgestaltung zu den Figuren 4a und 4b;
- Figur 6: die Gestaltung einer hydrodynamischen Kupplung als Doppelkupplung mit einer "automatischen" Freilauffunktion;
- Figur 7: eine alternative Ausgestaltung einer hydrodynamischen Kupplung als Doppelkupplung mit automatischer Füllungsverschiebung von einem Arbeitsraum in den anderen und zurück, in Abhängigkeit der Antriebsdrehzahl der beiden Antriebsmaschinen.

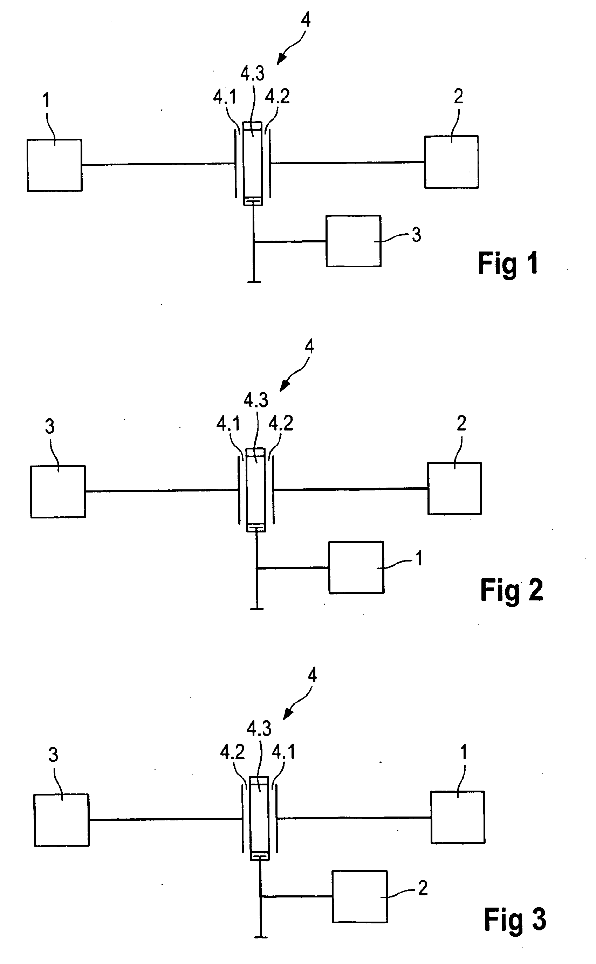

In der Figur 1 erkennt man in einem Antriebsstrang, der beispielsweise in einem Kraftfahrzeug vorgesehen sein kann, eine Verbrennungskraftmaschine 1, beispielsweise in Form eines Dieselmotors, einen Elektromotor 2 und ein Nebenaggregat 3. Alle drei Aggregate können wahlweise über eine Doppelkupplung 4 in eine Triebverbindung miteinander geschaltet werden. Hierzu weist die Doppelkupplung 4 drei Leistungsschnittstellen, je eine Schnittstelle für die genannten Aggregate, und zwei einzeln schaltbare Kupplungen 4.1, 4.2 auf.

Die Figuren 2 und 3 zeigen entsprechende Aggregate mit entsprechenden Schnittstellen und einzelnen Kupplungen.

Gemäß der Figur 1 sind die beiden Kupplungen 4.1 und 4.2 der Doppelkupplung 4 hinsichtlich einer Triebverbindung von der Verbrennungskraftmaschine 1 zum Elektromotor 2 in Reihe hintereinander geschaltet. Die zweite Kupplung 4.2 ist hinsichtlich des Leistungsflusses der genannten Triebverbindung hinter der ersten Kupplung 4.1 angeordnet. Das Nebenaggregat 3 steht in einer Triebverbindung mit einem Zwischenteil 4.3 der Doppelkupplung 4, welches zwischen den beiden Kupplungen 4.1 und 4.2 angeordnet ist, und über welches Antriebsleistung von der Kupplung 4.1 auf die Kupplung 4.2 oder umgekehrt übertragbar ist, und über welches ferner Antriebsleistung von der Kupplung 4.1 oder von der Kupplung 4.2 auf das Nebenaggregat 3 übertragbar ist. Der Anschluss des Nebenaggregats 3 kann, wie angedeutet, beispielsweise über eine Außenverzahnung des Zwischenteils 4.3 erfolgen.

Gemäß der Figur 2 sind gegenüber der Figur 1 die Positionen der Verbrennungskraftmaschine 1 und des Nebenaggregats 3 vertauscht. Somit sind die beiden Kupplungen 4.2 und 4.1 in einer Triebverbindung vom Elektromotor 2 zum Nebenaggregat 3 (wiederum in der genannten Reihenfolge) hintereinander angeordnet. Die Verbrennungskraftmaschine 1 ist am Zwischenteil 4.3 der Doppelkupplung 4 angeschlossen. Im Übrigen gilt das zu der Figur 1 gesagte.

Gemäß der Figur 3 sind nun gegenüber der Figur 2 die Positionen der Verbrennungskraftmaschine 1 und des Elektromotors 2 vertauscht. In einer Triebverbindung von der Verbrennungskraftmaschine 1 zum Nebenaggregat 3 sind die erste Kupplung 4.1 und die zweite Kupplung 4.2, wiederum unter Zwischenschaltung des Zwischenteils 4.3, in Reihe hintereinander angeordnet, in der genannten Reihenfolge. Der Elektromotor 2 ist diesmal am Zwischenteil 3 angeschlossen.

Nachfolgend sollen die verschiedenen Betriebszustände bei den Ausführungsformen gemäß der Figuren 1 bis 3 beschrieben werden: Um gemäß der Figur 1 mittels der Verbrennungskraftmaschine 1 das Nebenaggregat 3 anzutreiben, wird die erste Kupplung 4.1 geschlossen, und die zweite Kupplung 4.2 kann geöffnet werden. Wenn zugleich Antriebsleistung von der Verbrennungskraftmaschine 1 auf den Elektromotor 2, insbesondere um diesen generatorisch zu betreiben, oder vom Elektromotor 2 auf das Nebenaggregat 3 übertragen werden soll, wird zugleich die zweite Kupplung 4.2 geschlossen.

Um ausschließlich vom Elektromotor 2 auf das Nebenaggregat 3 Antriebsleistung zu übertragen, wird die erste Kupplung 4.1 geöffnet und die zweite Kupplung 4.2 geschlossen.

Um Antriebsleistung von der Verbrennungskraftmaschine 1 auf den Elektromotor 2 zu übertragen, werden beide Kupplungen 4.1 und 4.2 geschlossen, ebenso beim Übertragen von Antriebsleistung vom Elektromotor 2 auf die Verbrennungskraftmaschine 1. In diesem Fall wird zugleich das Nebenaggregat 3 angetrieben. Es kann jedoch auch eine zusätzliche Trennkupplung zwischen dem Zwischenteil 4.3 und dem Nebenaggregat 3 vorgesehen sein, um ein gleichzeitiges Antreiben des Nebenaggregats 3 zu vermeiden.

Gemäß der Figur 2 muss die erste Kupplung 4.1 und zugleich die zweite Kupplung 4.2 geschlossen werden, um Antriebsleistung vom Elektromotor 2 auf das Nebenaggregat 3 zu übertragen. Um Antriebsleistung von der Verbrennungskraftmaschine 1 auf das Nebenaggregat 3 zu übertragen, braucht nur die erste Kupplung 4.1 geschlossen werden, die zweite Kupplung 4.2 kann geschlossen oder geöffnet werden, je nachdem, ob zusätzlich Antriebsleistung von der Verbrennungskraftmaschine 1 auf den Elektromotor 2 oder vom Elektromotor 2 auf das Nebenaggregat 3 übertragen werden soll.

Gemäß der Figur 3 müssen die erste Kupplung 4.1 und die zweite Kupplung 4.2 gleichzeitig geschlossen werden, um Antriebsleistung von der Verbrennungskraftmaschine 1 auf das Nebenaggregat 3 zu übertragen. Um Antriebsleistung von dem Elektromotor 2 auf das Nebenaggregat 3 zu übertragen, braucht nur die zweite Kupplung 4.2 geschlossen werden. Je nachdem, ob zusätzlich Antriebsleistung von der Verbrennungskraftmaschine 1 auf das Nebenaggregat 3 oder den Elektromotor 2 oder vom Elektromotor 2 auf die Verbrennungskraftmaschine 1 übertragen werden soll, wird die erste Kupplung 4.1 geöffnet oder geschlossen.

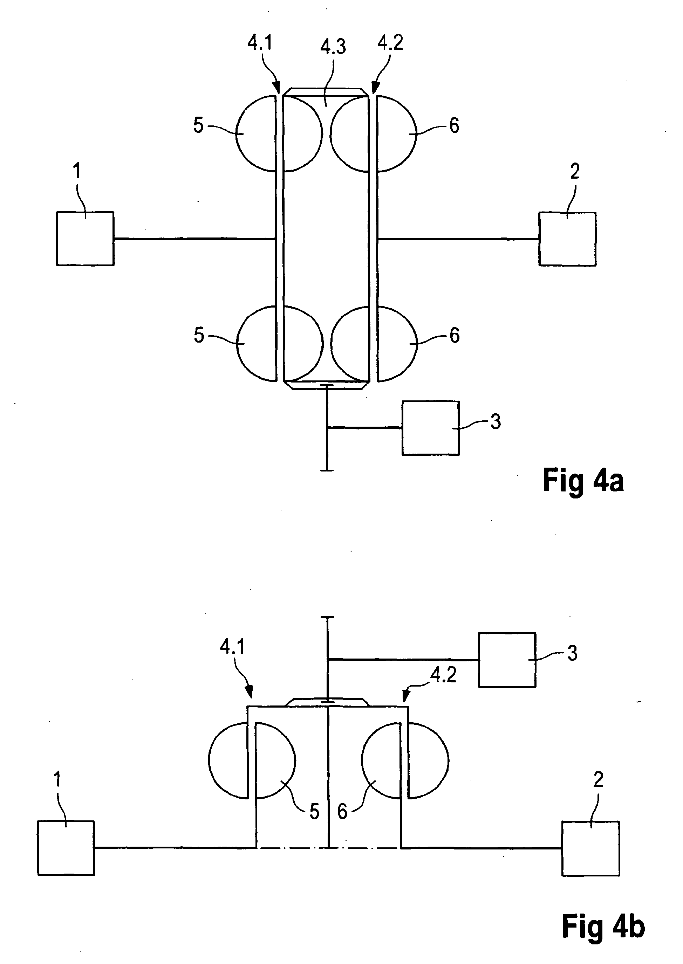

In der Figur 4a ist anhand der Anordnung der verschiedenen Aggregate gemäß der Figur 1 eine Ausführungsform mit einer hydrodynamischen Kupplung dargestellt. Die hydrodynamische Kupplung weist einen ersten Arbeitsraum 5 und einen zweiten Arbeitsraum 6 auf, die durch insgesamt drei beschaufelte Schaufelräder gebildet werden. Ein erstes Schaufelrad ist mit der Verbrennungskraftmaschine 1 in einer mechanischen Triebverbindung verbunden. Ein zweites Schaufelrad ist in einer mechanischen Triebverbindung mit dem Elektromotor 2 verbunden. In der Triebverbindung zwischen Verbrennungskraftmaschine 1 und erstem Schaufelrad und/oder in der Triebverbindung zwischen Elektromotor 2 und zweitem Schaufelrad können eine oder mehrere Trennkupplungen angeordnet sein, oder eine oder beide Triebverbindungen können frei von jeglichen Trennkupplungen sein.

Zwischen dem ersten Schaufelrad und dem zweiten Schaufelrad ist in Axialrichtung der hydrodynamischen Kupplung ein drittes Schaufelrad mit zwei Beschaufelungen, die in einer Back-to-back-Anordnung angeordnet sind, angeordnet. Dieses dritte Schaufelrad entspricht dem Mittelteil der Doppelkupplung 4 und es steht in einer mechanischen Triebverbindung mit dem Nebenaggregat 3. Auch diese Triebverbindung kann eine oder mehrere Trennkupplungen umfassen oder frei von Trennkupplungen sein. Beispielsweise weist das dritte Schaufelrad eine Außenverzahnung auf, die mit einem entsprechenden Ritzel oder dergleichen des Nebenaggregats 3 oder einem zwischengeschalteten Ritzel kämmt.

Die in der Figur 4b gezeigte Ausführungsform entspricht hinsichtlich ihrer Funktion der Ausführungsform gemäß der Figur 4a. Abweichend sind die beiden Beschaufelungen des dritten Schaufelrades, welches mit dem Nebenaggregat 3 in einer mechanischen Triebverbindung steht, in Axialrichtung vor und hinter dem ersten Schaufelrad und zweiten Schaufelrad mit jeweils einer Beschaufelung angeordnet, so dass das erste Schaufelrad zusammen mit dem zweiten Schaufelrad auf beiden axialen Seiten durch das dritte Schaufelrad umschlossen wird. Das dritte Schaufelrad kann dabei beispielsweise auf den Antriebswellen des ersten und des zweiten Schaufelrades relativgelagert sein.

Selbstverständlich ist es auch möglich, die in den Figuren 4a und 4b gezeigten hydrodynamischen Kupplungen mit zwei in Axialrichtung hintereinander angeordneten Arbeitsräumen 5, 6 bei den Ausführungsformen gemäß der Figuren 2 und 3 vorzusehen.

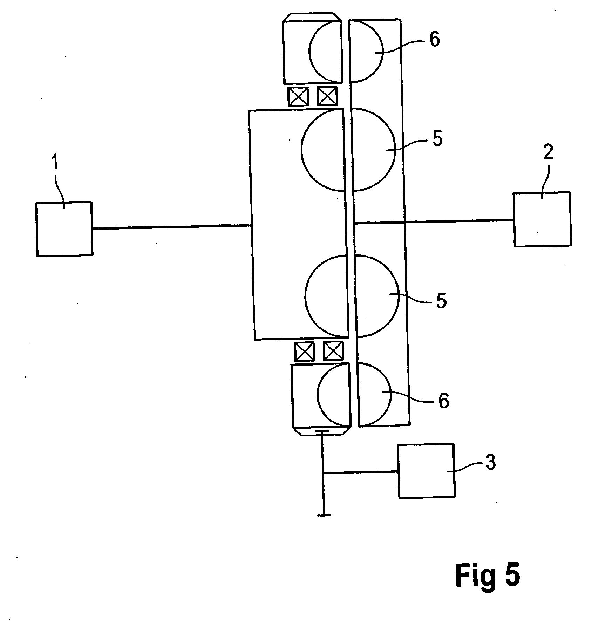

In der Figur 5 ist eine alternative Ausführungsform einer hydrodynamischen Kupplung schematisch gezeigt. Bei dieser Ausführungsform sind die beiden Arbeitsräume 5, 6 in radialer Richtung hintereinander angeordnet. Über den ersten Arbeitsraum 5 kann eine hydrodynamische Triebverbindung zwischen der Verbrennungskraftmaschine 1 und dem Elektromotor 2 hergestellt werden. Über den zweiten Arbeitsraum 6 kann eine hydrodynamische Triebverbindung zwischen dem Elektromotor 2 und dem Nebenaggregat 3 hergestellt werden. Bei Befüllung beider Arbeitsräume 5, 6 mit Arbeitsmedium kann eine hydrodynamische Triebverbindung von der Verbrennungskraftmaschine 1 über beide Arbeitsräume 5, 6 auf das Nebenaggregat 3 hergestellt werden. Somit entspricht der Leistungsfluss jenem der in der Figur 3 gezeigten Darstellung, und der erste Arbeitsraum 5 definiert die erste Kupplung 4.1 und der zweite Arbeitsraum 6 definiert die zweite Kupplung 4.2. Selbstverständlich sind auch andere Anordnungen, beispielsweise um die Leistungsflüsse gemäß der Figuren 1 oder 2 herzustellen, möglich.

Bei dem in der Figur 5 dargestellten Ausführungsbeispiel bildet ein erstes Schaufelrad mit zwei Beschaufelungen jeweils eine Hälfte beider Arbeitsräume 5 und 6 aus. Die zweite Hälfte des ersten Arbeitsraums 5 wird durch ein zweites Schaufelrad gebildet, das in einer Triebverbindung mit der Verbrennungskraftmaschine 1 steht. Ein drittes Schaufelrad, das relativ auf dem zweiten Schaufelrad gelagert ist, bildet die zweite Hälfte des zweiten Arbeitsraumes 6 aus und steht in einer mechanischen Triebverbindung mit dem Nebenaggregat 3.

Der Elektromotor 2 ist bei dem gezeigten Ausführungsbeispiel in einer mechanischen Triebverbindung an dem ersten Schaufelrad angeschlossen.

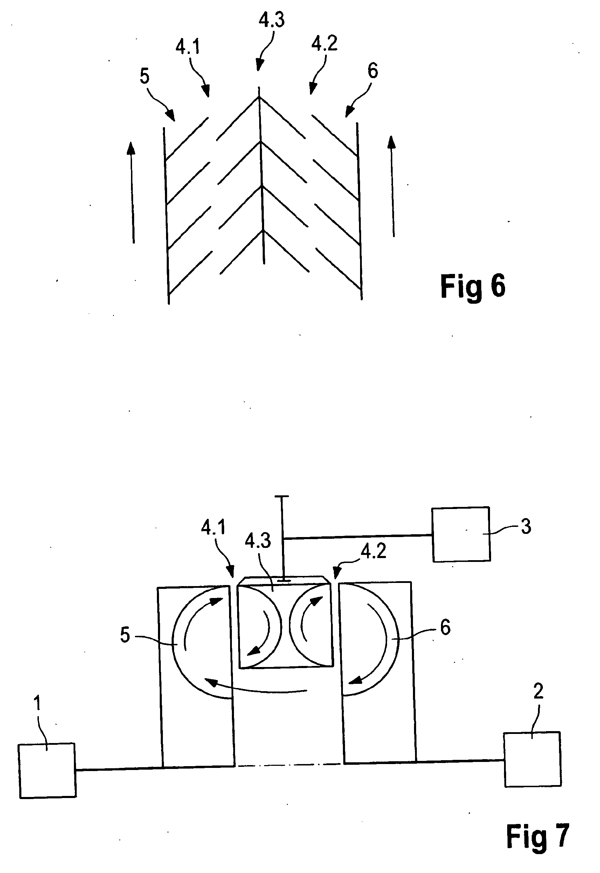

Gemäß der Figur 6 sind bei einer hydrodynamischen Kupplung als Doppelkupplung mit zwei Arbeitsräumen 5, 6 die Beschaufelungen in den beiden Arbeitsräumen 5, 6 als Schrägbeschaufelungen ausgeführt. Das entsprechend der Figur 4a zwischen dem ersten Schaufelrad und dem zweiten Schaufelrad angeordnete dritte Schaufelrad als Zwischenteil 4.3 weist zwei Beschaufelungen in einer Back-to-back-Anordnung auf, welche entgegengesetzt zueinander schräggestellt sind, dies bedeutet dabei, dass die Schaufeln, welche in der Figur 6 in einem abgewickelten Schnitt in Umfangsrichtung durch die hydrodynamische Kupplung schematisch gezeigt sind, nicht senkrecht auf dem Schaufelradboden beziehungsweise auf einer drehachssenkrechten Ebene durch den Trennspalt zwischen den Kupplungsrädern stehen, sondern mit einem Schrägstellungswinkel kleiner als 90° gegenüber dieser Ebene positioniert sind.

Auch die Schaufeln des ersten Schaufelrads und des zweiten Schaufelrads sind schräggestellt, wiederum entgegengesetzt zueinander schräggestellt, jedoch parallel zu den Schaufeln der ihnen zugewandten Beschaufelung des dritten Schaufelrades (Zwischenteil 4.3) ausgerichtet. Durch diese Wahl von zueinander abweichend schräggestellten Beschaufelungen in den beiden Arbeitsräumen 5 und 6 kann eine Freilauffunktion erreicht werden, die wie folgt arbeitet: Wenn das erste Schaufelrad, das mit dem Zwischenteil 4.3 den ersten Arbeitsraum 5 ausbildet, derart angetrieben wird, dass sich die Schaufeln der beiden Schaufelräder (erstes Schaufelrad und drittes Schaufelrad) spießend gegenüberstehen, wird vom ersten Schaufelrad auf das dritte Schaufelrad (Zwischenteil 4.3) mehr Antriebsleistung übertragen als dies der Fall bei einer Ausführungsform mit einer geradebeschaufelten hydrodynamischen Kupplung, das heißt mit senkrecht auf einer Ebene durch den Trennspalt stehenden Schaufeln, wäre. Bei der in der Figur 6 gezeigten Ausführungsform wird somit das erste Schaufelrad in der Richtung des dargestellten Pfeils angetrieben.

Das dritte Schaufelrad (Zwischenteil 4.3) läuft in derselben Richtung um, wodurch sich seine Schaufeln, die dem zweiten Schaufelrad (ganz rechts in der Figur 6) zugewandt sind, fliehend zu den Schaufeln des zweiten Schaufelrads bewegen. Hierdurch wird vom dritten Schaufelrad (Zwischenteil 4.3) auf das zweite Schaufelrad weniger Antriebsleistung übertragen, als dies bei einer geradebeschaufelten hydrodynamischen Kupplung der Fall wäre. Es wird daher in dem zweiten Arbeitsraum 6 eine Art Freilauffunktion erreicht.

Wenn hingegen das zweite Schaufelrad, beispielsweise durch den Elektromotor (nicht dargestellt) angetrieben wird, wiederum in Richtung des dargestellten Pfeils, bewegen sich seine Schaufeln spießend zu den ihnen zugeordneten Schaufeln des dritten Schaufelrades. Umgekehrt bewegen sich dann in dem ersten Arbeitsraum 5 die Schaufeln des dritten Schaufelrades fliehend zu den Schaufeln des ersten Schaufelrades. Somit wird im ersten Arbeitsraum 5 eine Freilauffunktion erreicht.

Durch diese wechselseitige Freilauffunktion in Abhängigkeit davon, welches der beiden äußeren Schaufelräder mit einer größeren Drehzahl angetrieben wird, kann das Schleppmoment, das durch das mit der vergleichsweise kleineren Drehzahl angetriebene äußere Schaufelrad beziehungsweise nicht angetriebene äußere Schaufelrad erzeugt wird und das Mittelteil 4.3 bremst, minimiert werden.

In der Figur 7 ist eine alternative Ausführungsform zu jener der Figur 6 dargestellt, mit welcher eine entsprechende Freilauffunktion in jeweils genau einem der beiden Arbeitsräume 5, 6 erreicht werden kann. Im Gegensatz zu der Ausführungsform gemäß der Figur 6, welche auch bei konstant gefüllten Arbeitsräumen 5, 6 die gewünschte Freilauffunktion zur Verfügung stellt, findet bei der Figur 7 eine automatische Füllungsverschiebung von dem zweiten Arbeitsraum 6, der durch das mit dem Elektromotor 2 mechanisch verbundene zweite Schaufelrad und das Zwischenteil 4.3 ausgebildet wird, in den ersten Arbeitsraum 5, der durch das mit der Verbrennungskraftmaschine 1 mechanisch verbundene erste Schaufelrad und das Zwischenteil 4.3 gebildet wird, oder umgekehrt, statt. Dadurch kann erreicht werden, dass immer dann, wenn die Verbrennungskraftmaschine 1 zum Antrieb des Nebenaggregats 3, das mechanisch mit dem Zwischenteil 4.3 verbunden ist, zugeschaltet wird, und sich dadurch in den beiden Arbeitsräumen 5, 6 Strömungskreisläufe entsprechend der dargestellten Pfeile ausbilden, eine Füllungsverschiebung von dem zweiten Arbeitsraum 6 in den ersten Arbeitsraum 5 erreicht wird, wodurch der zweite Arbeitsraum 6 teilweise oder vollständig entleert wird und der erste Arbeitsraum 5 mit der aus dem zweiten Arbeitsraum 6 entleerten Arbeitsmediummenge befüllt oder zusätzlich befüllt wird. Im zweiten Arbeitsraum 6 wird dadurch die Antriebsleistungsübertragung verringert, und das durch den Elektromotor 2 auf das Zwischenteil 4.3 ausgeübte Schleppmoment minimiert oder vollständig aufgehoben.

Wenn hingegen der Elektromotor 2 zum Antrieb des Nebenaggregats 3 zugeschaltet wird, wird sich, zumindest solange das zweite Schaufelrad mit einer größeren Drehzahl als das erste Schaufelrad umläuft, die Arbeitsmediumströmung in den beiden Arbeitsräumen 5, 6 gegenüber der durch die Pfeile angedeutete Kreislaufströmung in der Richtung umkehren, so dass nun, erneut automatisch, Arbeitsmedium aus einem Arbeitsraum in den anderen überführt wird, nämlich dann von dem ersten Arbeitsraum 5 in den zweiten Arbeitsraum 6. Somit wird im ersten Arbeitsraum 5 eine Freilauffunktion erreicht, und das Schleppmoment der Verbrennungskraftmaschine 1 minimiert oder aufgehoben.

Um die gewünschte automatische Überführung von Arbeitsmedium aus dem ersten Arbeitsraum 5 in den zweiten Arbeitsraum 6 oder umgekehrt, in Abhängigkeit der Antriebsgeschwindigkeit der beiden äußeren Schaufelräder relativ zueinander zu erreichen, sind, wie in der Figur 7 dargestellt, in einem Axialschnitt durch die hydrodynamische Kupplung die beiden durch das Zwischenteil 4.3 ausgebildeten Arbeitsraumhälften mit einem größeren inneren Durchmesser ausgeführt, als die durch die beiden äußeren Schaufelräder (das erste Schaufelrad und das zweite Schaufelrad) ausgebildeten Arbeitsraumhälften. Hierdurch kann immer dann, wenn in einer der beiden im Zwischenteil 4.3 ausgebildeten Arbeitsraumhälften das Arbeitsmedium radial nach außen strömt, eine Arbeitsmediumströmung radial innerhalb der beiden Arbeitsraumhälften des Zwischenteils 4.3 vorbei an dem Zwischenteil 4.3 erreicht werden. Die Richtung der Strömung radial innen am Zwischenteil 4.3 beziehungsweise dessen Arbeitsraumhälften vorbei ist derart, dass sie stets entgegengesetzt zu der Strömungsrichtung des Arbeitsmediumstroms ist, der im radial äußeren Bereich aus dem Zwischenteil 4.3 in eines der beiden äußeren Schaufelräder strömt.

Somit kann sowohl bei der Ausführungsform gemäß der Figur 6 als auch bei der Ausführungsform gemäß der Figur 7 durch die gewählte besondere Gestaltung der hydrodynamischen Kupplung als Doppelkupplung, wobei anstelle eines einzigen Zwischenteils 4.3 mit zwei Beschaufelungen in einer Back-to-back-Anordnung auch zwei drehfest oder in einer Triebverbindung aneinander angeschlossene, jeweils eine Beschaufelung tragende Zwischenteile vorgesehen sein könnten, ein besonders leichtes Umschalten des Antriebs des Nebenaggregats 3, das an dem Zwischenteil oder an den Zwischenteilen angeschlossen ist, von der Verbrennungskraftmaschine 1 auf den Elektromotor 2 und zurück erreicht werden, wobei automatisch die Antriebsleistungsübertragung in dem Arbeitsraum reduziert wird, der dann nicht mehr zwischen der treibenden Antriebsmaschine beziehungsweise stärker antreibenden Antriebsmaschine und dem Zwischenteil 4.3 angeordnet ist. Es wird automatisch eine Freilauffunktion in diesem Arbeitsraum erreicht.

Selbstverständlich kann auch eine Ausführungsform gemäß der Figur 7 mit Schrägbeschaufelungen gemäß der Figur 6 versehen werden.

Anstelle einer hydrodynamischen Kupplung können auch andere Kupplungen zum Einsatz kommen. Nur beispielsweise seien Reibkupplungen, Klauenkupplungen, Lamellenkupplungen oder Viskokupplungen, letztere insbesondere mit rheologischen Flüssigkeiten, genannt. Bei einer Reibkupplung kann beispielsweise eine solche Ausführungsform gewählt werden, bei welcher sich in Radialrichtung verlagerbare Segmente mit zunehmender Drehzahl in einem Reibschluss an ein die Segmente in Umfangsrichtung umschließendes Außenrad anlegen.

## Patentansprüche

1. Antriebsstrang, insbesondere in einem Kühlfahrzeug mit einem Kühlkompressor;
mit einer Verbrennungskraftmaschine (1);
mit einem Elektromotor (2);
mit einem Nebenaggregat (3), welches wahlweise in eine Triebverbindung mit der Verbrennungskraftmaschine (1) und dem Elektromotor (2) schaltbar ist, um mechanisch angetrieben zu werden;
mit einer Doppelkupplung (4), die in der Triebverbindung zwischen der Verbrennungskraftmaschine (1) und dem Nebenaggregat (3) sowie in der Triebverbindung zwischen dem Elektromotor (2) und dem Nebenaggregat (3) angeordnet ist;
die Doppelkupplung (4) weist zwei unabhängig voneinander betätigbare Kupplungen (4.1, 4.2) auf, wobei mit der ersten Kupplung (4.1) die Triebverbindung zwischen der Verbrennungskraftmaschine (1) und dem Nebenaggregat (3) wahlweise herstellbar oder unterbrechbar ist, und mit der zweiten Kupplung (4.2) die Triebverbindung zwischen dem Elektromotor (2) und dem Nebenaggregat (3) wahlweise herstellbar oder unterbrechbar ist und mit den beiden Kupplungen (4.1, 4.2) zugleich die Triebverbindung zwischen der Verbrennungskraftmaschine (1) und dem Elektromotor (2) wahlweise herstellbar oder unterbrechbar ist;
das Nebenaggregat (3) ist ein Kühlkompressor oder Klimaanlagenkompressor;
die Doppelkupplung (4) weist drei Leistungsschnittstellen zum Übertragen von mechanischer Antriebsleistung auf, wobei die Verbrennungskraftmaschine (1), der Elektromotor (2) und das Nebenaggregat (3) jeweils an einer der drei Leistungsschnittstellen angeschlossen sind, wobei die Verbrennungskraftmaschine (1) zusätzlich zu einer Antriebsmaschine zum Antreiben des Fahrzeugs vorgesehen ist.

2. Antriebsstrang, insbesondere in einem Kühlfahrzeug mit einem Kühlkompressor;
mit einer Verbrennungskraftmaschine (1);
mit einem Elektromotor (2);
mit einem Nebenaggregat (3), welches wahlweise in eine Triebverbindung mit der Verbrennungskraftmaschine (1) und dem Elektromotor (2) schaltbar ist, um mechanisch angetrieben zu werden;
mit einer Doppelkupplung (4), die in der Triebverbindung zwischen der Verbrennungskraftmaschine (1) und dem Nebenaggregat (3) sowie in der Triebverbindung zwischen dem Elektromotor (2) und dem Nebenaggregat (3) angeordnet ist;
die Doppelkupplung (4) weist zwei unabhängig voneinander betätigbare Kupplungen (4.1, 4.2) auf, wobei mit der ersten Kupplung (4.1) die Triebverbindung zwischen der Verbrennungskraftmaschine (1) und dem Nebenaggregat (3) wahlweise herstellbar oder unterbrechbar ist, und mit der zweiten Kupplung (4.2) die Triebverbindung zwischen dem Elektromotor (2) und der Verbrennungskraftmaschine (1) wahlweise herstellbar oder unterbrechbar ist und mit den beiden Kupplungen (4.1, 4.2) zugleich die Triebverbindung zwischen dem Elektromotor (2) und dem Nebenaggregat (3) wahlweise herstellbar oder unterbrechbar ist;
das Nebenaggregat (3) ist ein Kühlkompressor oder Klimaanlagenkompressor;
die Doppelkupplung (4) weist drei Leistungsschnittstellen zum Übertragen von mechanischer Antriebsleistung auf, wobei die Verbrennungskraftmaschine (1), der Elektromotor (2) und das Nebenaggregat (3) jeweils an einer der drei Leistungsschnittstellen angeschlossen sind, wobei die Verbrennungskraftmaschine (1) zusätzlich zu einer Antriebsmaschine zum Antreiben des Fahrzeugs vorgesehen ist.

3. Antriebsstrang, insbesondere in einem Kühlfahrzeug mit einem Kühlkompressor;
mit einer Verbrennungskraftmaschine (1);
mit einem Elektromotor (2);
mit einem Nebenaggregat (3), welches wahlweise in eine Triebverbindung mit der Verbrennungskraftmaschine (1) und dem Elektromotor (2) schaltbar ist, um mechanisch angetrieben zu werden;
mit einer Doppelkupplung (4), die in der Triebverbindung zwischen der Verbrennungskraftmaschine (1) und dem Nebenaggregat (3) sowie in der Triebverbindung zwischen dem Elektromotor (2) und dem Nebenaggregat (3) angeordnet ist;
die Doppelkupplung (4) weist zwei unabhängig voneinander betätigbare Kupplungen (4.1, 4.2) auf, wobei mit der ersten Kupplung (4.1) die Triebverbindung zwischen der Verbrennungskraftmaschine (1) und dem Elektromotor (2) wahlweise herstellbar oder unterbrechbar ist, und mit der zweiten Kupplung (4.2) die Triebverbindung zwischen dem Elektromotor (2) und dem Nebenaggregat (3) wahlweise herstellbar oder unterbrechbar ist und mit den beiden Kupplungen (4.1, 4.2) zugleich die Triebverbindung zwischen der Verbrennungskraftmaschine (1) und dem Nebenaggregat (3) wahlweise herstellbar oder unterbrechbar ist;
das Nebenaggregat (3) ist ein Kühlkompressor oder Klimaanlagenkompressor;
die Doppelkupplung (4) weist drei Leistungsschnittstellen zum Übertragen von mechanischer Antriebsleistung auf, wobei die Verbrennungskraftmaschine (1) der Elektromotor (2) und das Nebenaggregat (3) jeweils an einer der drei Leistungsschnittstellen angeschlossen sind, wobei die Verbrennungskraftmaschine (1) zusätzlich zu einer Antriebsmaschine zum Antreiben des Fahrzeugs vorgesehen ist.

4. Antriebsstrang gemäß einem der Ansprüche 1 oder 3, **dadurch gekennzeichnet, dass** die Doppelkupplung (4) als hydrodynamische Kupplung mit zwei unabhängig voneinander befüllbaren und entleerbaren Arbeitsräumen (5, 6) jeweils zur hydrodynamischen Leistungsübertragung mittels eines Arbeitsmediumkreislaufes ausgeführt ist, und die erste Kupplung (4.1) durch den ersten Arbeitsraum (5) und die zweite Kupplung (4.2) durch den zweiten Arbeitsraum (6) gebildet werden.

5. Antriebsstrang gemäß Anspruch 4, **dadurch gekennzeichnet, dass** die beiden Arbeitsräume (5, 6) in Axialrichtung der hydrodynamischen Kupplung bezogen auf die Drehachse nebeneinander, insbesondere mit einem gemeinsamen Laufrad mit zwei Beschaufelungen in einer Back-to-back-Anordnung, oder in Radialrichtung hintereinander, einander umschließend angeordnet sind.

6. Antriebsstrang gemäß einem der Ansprüche 4 oder 5, **dadurch gekennzeichnet, dass** in den beiden Arbeitsräumen (5, 6) jeweils eine Schrägbeschaufelung der beiden Kupplungen (4.1, 4.2) vorgesehen ist, wobei die Richtung der Schrägstellung im ersten Arbeitsraum (5) entgegengesetzt zu jener im zweiten Arbeitsraum (6) ausgeführt ist.

7. Antriebsstrang gemäß Anspruch 5, **dadurch gekennzeichnet, dass** die beiden Arbeitsräume (5, 6) in Axialrichtung der hydrodynamischen Kupplung bezogen auf die Drehachse nebeneinander, insbesondere mit einem gemeinsamen Laufrad mit zwei Beschaufelungen in einer Back-to-back-Anordnung, angeordnet sind, und die jeweils axial inneren Hälften der beiden Arbeitsräume (5, 6) mit einem größeren inneren Durchmesser versehen sind als die beiden jeweils äußeren axialen Hälften der beiden Arbeitsräume (5, 6).

8. Antriebsstrang gemäß einem der Ansprüche 1 bis 7, **dadurch gekennzeichnet, dass** die zweite Kupplung (4.2) hinsichtlich des Antriebsleistungsflusses in Reihe zu der ersten Kupplung (4.1) in einer Triebverbindung zwischen der Verbrennungskraftmaschine (1) und dem Elektromotor (2) angeordnet ist.

9. Antriebsstrang gemäß einem der Ansprüche 1 bis 7, **dadurch gekennzeichnet, dass** die zweite Kupplung (4.2) hinsichtlich des Antriebsleistungsflusses in Reihe zu der ersten Kupplung (4.1) in einer Triebverbindung zwischen der Verbrennungskraftmaschine (1) und dem Nebenaggregat (3) oder zwischen dem Nebenaggregat (3) und dem Elektromotor (2) angeordnet ist.

10. Verfahren zum Betreiben eines Antriebsstrangs gemäß einem der Ansprüche 1 bis 9, mit den folgenden Schritten:
in einem ersten Betriebszustand wird die Triebverbindung zwischen der Verbrennungskraftmaschine (1) und dem Nebenaggregat (3) mittels der ersten Kupplung (4.1) oder mittels beiden Kupplungen (4.1, 4.2) zugleich hergestellt und das Nebenaggregat (3) mittels der Verbrennungskraftmaschine (1) angetrieben;
in einem zweiten Betriebszustand wird die Triebverbindung zwischen dem Elektromotor (2) und dem Nebenaggregat (3) mittels der zweiten Kupplung (4.2) oder mittels beiden Kupplungen (4.1, 4.2) zugleich hergestellt und das Nebenaggregat (3) mittels des Elektromotors (2) angetrieben;
in einem dritten Betriebszustand wird die Triebverbindung zwischen der Verbrennungskraftmaschine (1) und dem Elektromotor (2) mittels der ersten Kupplung (4.1) und/oder der zweiten Kupplung (4.2) hergestellt und der Elektromotor (3) generatorisch mittels der Verbrennungskraftmaschine (1) angetrieben oder die Verbrennungskraftmaschine (1) mittels des Elektromotors (2) angetrieben.

11. Verfahren gemäß Anspruch 10, **dadurch gekennzeichnet, dass** in dem dritten oder einem vierten Betriebszustand die Verbrennungskraftmaschine (1) mittels des Elektromotors (2) als elektrischer Starter angelassen wird.

12. Verfahren gemäß einem der Ansprüche 10 oder 11, **dadurch gekennzeichnet, dass** in ausgewählten Betriebszuständen, in welchen die Verbrennungskraftmaschine (1) aufgrund einer an ihr anliegenden und von ihr anzutreibenden geringen Last in einem Arbeitspunkt ihres Motorkennfeldes mit vergleichsweise geringem Wirkungsgrad arbeitet, mittels des Elektromotors (2) im generatorischen Betrieb eine zusätzliche Last auf die Verbrennungskraftmaschine (1) durch Herstellen einer Triebverbindung zwischen der Verbrennungskraftmaschine (1) und dem Elektromotor (2) mittels der ersten Kupplung (4.1) und/oder der zweiten Kupplung (4.2) aufgebracht wird und dadurch der Arbeitspunkt der Verbrennungskraftmaschine (1) in ihrem Motorkennfeld zu einem Punkt mit vergleichsweise höherem Wirkungsgrad verschoben wird.

## Claims

1. A drive train, in particular in a refrigerated vehicle with a cooling compressor;
with an internal combustion engine (1);
with an electric motor (2);
with an auxiliary unit (3), which optionally can be switched into a drive connection with the internal combustion engine (1) and the electric motor (2), to be driven mechanically;
with a dual coupling (4), which is arranged in the drive connection between the internal combustion engine (1) and the auxiliary unit (3) as well as in the drive connection between the electric motor (2) and the auxiliary unit (3);
the dual coupling (4) compriser two couplings (4.1, 4.2) which can be operated independently from one another, whereas with the first coupling (4.1), the drive connection between the internal combustion engine (1) and the auxiliary unit (3) can selectively be provided or interrupted, and whereas with the second coupling (4.2), the drive connection between the electric motor (2) and the auxiliary unit (3) can selectively be provided or interrupted, and whereas with both couplings (4.1, 4.2), the drive connection between the internal combustion engine (1) and the electric motor (2) can selectively be provided or interrupted at the same time;
the auxiliary unit (3) is a cooling compressor or an air conditioning compressor;
the double clutch (4) comprises three power interfaces for transmitting a mechanical drive power, whereas the internal combustion engine (1), the electric motor (2) and the auxiliary unit (3) are respectively connected to one of the three power interfaces, whereas the internal combustion engine (1) is provided in addition to an engine for driving the vehicle.

2. A drive train, in particular in a refrigerated truck with a cooling compressor;
with an internal combustion engine (1);
with an electric motor (2);
with an auxiliary unit (3), which optionally can be switched into a drive connection with the internal combustion engine (1) and the electric motor (2), to be driven mechanically;
with a dual coupling (4), which is arranged in the drive connection between the internal combustion engine (1) and the auxiliary unit (3) as well as in the drive connection between the electric motor (2) and the auxiliary unit (3);
the dual coupling (4) comprises two couplings (4.1, 4.2) which can be operated independently from one another, whereas with the first coupling (4.1), the drive connection between the internal combustion engine (1) and the auxiliary unit (3) can selectively be provided or interrupted, and with the second coupling (4.2), the drive connection between the electric motor (2) and the internal combustion engine (1) can selectively be provided or interrupted and whereas with both couplings (4.1, 4.2), the drive connection between the electric motor (2) and the auxiliary unit (3) can selectively be provided or interrupted at the same time;
the auxiliary unit (3) is a cooling compressor or an air conditioning compressor;
the dual coupling (4) comprises three power interfaces for transmitting a mechanical drive power, whereas the internal combustion engine (1), the electric motor (2) and the auxiliary unit (3) are respectively connected to one of the three power interfaces, whereas the internal combustion engine (1) is provided in addition to an engine for driving the vehicle.

3. A drive train, in particular in a refrigerated vehicle with a cooling compressor;
with an internal combustion engine (1);
with an electric motor (2);
with an auxiliary unit (3), which optionally can be switched into a drive connection with the internal combustion engine (1) and the electric motor (2), to be driven mechanically;
with a dual coupling (4), which is arranged in the drive connection between the internal combustion engine (1) and the auxiliary unit (3) as well as in the drive connection between the electric motor (2) and the auxiliary unit (3);
the dual coupling (4) comprises two couplings (4.1, 4,2) which can be operated independently from one another, whereas with the first coupling (4.1), the drive connection between the internal combustion engine (1) and the electric motor (2) can selectively be provided or interrupted, and whereas with the second coupling (4.2), the drive connection between the electric motor (2) and the auxiliary unit (3) can selectively be provided or interrupted and with whereas both couplings (4.1, 4.2), the drive connection between the internal combustion engine (1) and the auxiliary unit (3) can selectively be provided or interrupted at the same time;
the auxiliary unit (3) is a cooling compressor or an air conditioning compressor;
the dual coupling (4) comprises three power interfaces for transmitting a mechanical drive power, whereas the internal combustion engine (1), the electric motor (2) and the auxiliary unit (3) are respectively connected to one of the three power interfaces, whereas the internal combustion engine (1) is provided in addition to an engine for driving the vehicle.

4. The drive train according to one of claims 1 or 3, **characterised in that** the dual coupling (4) is designed as a hydrodynamic coupling with two working chambers (5, 6) which can be filled and emptied independently from one another respectively for hydrodynamic power transmission by means of a working medium circuit, and the first coupling (4.1) is formed by the first working chamber (5) and the second coupling (4.2) is formed by the second working chamber (6).

5. The drive train according to claim 4, **characterised in that** both working chambers (5, 6) are arranged in axial direction of the hydrodynamic coupling with reference to the rotational axis side by side, in particular with a common rotor with two bladings, in a back-to-back configuration, or in radial direction behind one another, encircling each other.

6. The drive train according to one of claims 4 or 5, **characterised in that** an oblique blading of both couplings (4.1, 4.2) is provided respectively in both working chambers (5, 6), whereas the direction of the obliqueness is designed in the first working chamber (5) opposite to that in the second working chamber (6).

7. The drive train according to claim 5, **characterised in that** both working chambers (5, 6) are arranged in axial direction of the hydrodynamic coupling with reference to the rotational axis side by side, in particular with a common rotor with two bladings, in a back-to-back configuration, and the respectively axially internal halves of both working chambers (5, 6) comprise a larger internal diameter than both respective external axial halves of both working chambers (5, 6).

8. The train according to one of claims 1 to 7, **characterised in that** the second coupling (4.2) as regards the drive power flow is arranged in series with respect to the first coupling (4.1) in a drive connection between the internal combustion engine (1) and the electric motor (2).

9. The train according to one of claims 1 to 7, **characterised in that** the second coupling (4.2) as regards the drive power flow is arranged in series with respect to the first coupling (4.1) in a drive connection between the internal combustion engine (1) and the auxiliary unit (3) or between the auxiliary unit (3) and the electric motor (2).

10. The method for operating a drive train in accordance with one of the claims 1 to 9, with the following steps:
in a first operating mode, the drive connection between the internal combustion engine (1) and the auxiliary unit (3) is at the same time provided by means of the first coupling (4.1) or by means of both couplings (4.1, 4.2) and the auxiliary unit (3) is driven by means of the internal combustion engine (1);
in a second operating mode, the drive connection between the electric motor (2) and the auxiliary unit (3) is at the same time provided by means of the second coupling (4.2) or by means of both couplings (4.1, 4.2) and
the auxiliary unit (3) is driven by means of the electric motor (2);
in a third operating mode, the drive connection between the internal combustion engine (1) and the electric motor (2) is provided by means of the first coupling (4.1) and/or of the second coupling (4.2) and the electric motor (3) is driven as a generator by means of the internal combustion engine (1) or the internal combustion engine (1) is driven by means of the electric motor (2).

11. The method according to claim 10, **characterised in that** in the third or a fourth operating mode, the internal combustion engine (1) is started by means of the electric motor (2) acting as an electric starter.

12. The method according to any of the claims 10 or 11, **characterised in that** in selected operating modes, in which the internal combustion engine (1) works with a comparatively lower degree of efficiency in a working point of their engine characteristics which is due to a minimal load resting against it and to a minimal load to be driven by means of the electric motor (2) in a generator operation, an additional load is applied to the internal combustion engine (1) by providing a drive connection between the internal combustion engine (1) and the electric motor (2) by means of the first coupling (4.1) and/or of the second coupling (4.2) and consequently the working point of the internal combustion engine (1) is moved in its engine characteristics up to a point with a comparatively higher degree of efficiency.

## Revendications

1. Train d'entraînement, en particulier dans un véhicule réfrigérant avec un compresseur de réfrigérant;
muni d'un moteur à combustion interne (1);
muni d'un moteur électrique (2);
muni d'un groupe auxiliaire (3), qui peut être accouplé au choix pour se trouver en liaison motrice avec le moteur à combustion interne (1) et le moteur électrique (2), pour être entraîné mécaniquement;
muni d'un double accouplement (4), qui est agencé dans la liaison motrice entre le moteur à combustion interne (1) et le groupe auxiliaire (3) de même que dans la liaison motrice entre le moteur électrique (2) et le groupe auxiliaire (3);
le double accouplement (4) présente deux accouplements (4.1, 4.2) pouvant être sollicités indépendamment l'un de l'autre, tandis qu'avec le premier accouplement (4.1), la liaison motrice entre le moteur à combustion interne (1) et le groupe auxiliaire (3) peut être produite ou interrompue au choix, et qu'avec le second accouplement (4.2), la liaison motrice entre le moteur électrique (2) et le groupe auxiliaire (3) peut être produite ou interrompue au choix et qu'avec les deux accouplements (4.1, 4.2), dans le même temps la liaison motrice entre le moteur à combustion interne (1) et le moteur électrique (2) peut être produite ou interrompue au choix; le groupe auxiliaire (3) est un compresseur de réfrigérant ou un compresseur pour climatisation;
le double accouplement (4) comporte trois interfaces de puissance permettant de transmettre une puissance d'entraînement mécanique, dans lequel le moteur à combustion interne (1), le moteur électrique (2) et le groupe auxiliaire (3) sont connectés respectivement à l'une des trois interfaces de puissance, où le moteur à combustion interne (1) est prévu en plus d'un moteur d'entraînement pour entraîner le véhicule.

2. Train d'entraînement, en particulier dans un véhicule réfrigérant avec un compresseur de réfrigérant;
muni d'un moteur à combustion interne (1);
muni d'un moteur électrique (2),
muni d'un groupe auxiliaire (3), qui peut être accouplé au choix pour se trouver en liaison motrice avec le moteur à combustion interne (1) et le moteur électrique (2), pour être entraîné mécaniquement;
muni d'un double accouplement (4), qui est agencé dans la liaison motrice entre le moteur à combustion interne (1) et le groupe auxiliaire (3) de même que dans la liaison motrice entre le moteur électrique (2) et le groupe auxiliaire (3);
le double accouplement (4) présente deux accouplements (4.1, 4.2) pouvant être sollicités indépendamment l'un de l'autre, tandis qu'avec le premier accouplement (4.1), la liaison motrice entre le moteur à combustion interne (1) et le groupe auxiliaire (3) peut être produite ou interrompue au choix, et qu'avec le second accouplement (4.2), la liaison motrice entre le moteur électrique et le moteur à combustion interne peut être produite ou interrompue au choix; et qu'avec les deux accouplements (4.1, 4.2), dans le même temps la liaison motrice entre le moteur électrique (2) et le groupe auxiliaire (3) peut être produite ou interrompue au choix;
le groupe auxiliaire (3) est un compresseur de réfrigérant ou un compresseur pour climatisation;
le double accouplement (4) comporte trois interfaces de puissance permettant de transmettre une puissance d'entraînement mécanique, dans lequel le moteur à combustion interne (1), le moteur électrique (2) et le groupe auxiliaire (3) sont connectés respectivement à l'une des trois interfaces de puissance, où le moteur à combustion interne (1) est prévu en plus d'un moteur d'entraînement pour entraîner le véhicule.

3. Train d'entraînement, en particulier dans un véhicule réfrigérant avec un compresseur de réfrigérant;
muni d'un moteur à combustion interne (1);
muni d'un moteur électrique (2),
muni d'un groupe auxiliaire (3), qui peut être accouplé au choix pour se trouver en liaison motrice avec le moteur à combustion interne (1) et le moteur électrique (2), pour être entraîné mécaniquement;
muni d'un double accouplement (4), qui est agencé dans la liaison motrice entre le moteur à combustion interne (1) et le groupe auxiliaire (3) de même que dans la liaison motrice entre le moteur électrique (2) et le groupe auxiliaire (3);
le double accouplement (4) présente deux accouplements (4.1, 4,2) pouvant être sollicités indépendamment l'un de l'autre, tandis qu'avec le premier accouplement (4.1), la liaison motrice entre le moteur à combustion interne (1) et le moteur électrique (2) peut être produite ou interrompue au choix; et qu'avec le second accouplement (4.2), la liaison motrice entre le moteur électrique (2) et le groupe auxiliaire (3) peut être produite ou interrompue au choix et qu'avec les deux accouplements (4.1, 4.2), dans le même temps la liaison motrice entre le moteur à combustion interne (1) et le moteur électrique (3) peut être produite ou interrompue au choix;
le groupe auxiliaire (3) est un compresseur de réfrigérant ou un compresseur pour climatisation;
le double accouplement (4) comporte trois interfaces de puissance permettant de transmettre une puissance d'entraînement mécanique, dans lequel le moteur à combustion interne (1), le moteur électrique (2) et le groupe auxiliaire (3) sont connectés respectivement à l'une des trois interfaces de puissance, où le moteur à combustion interne (1) est prévu en plus d'un moteur d'entraînement pour entraîner le véhicule.

4. Train d'entraînement selon l'une quelconque des revendications 1 ou 3, **caractérisé en ce que** le double accouplement (4) est conçu comme accouplement hydrodynamique avec deux chambres de travail (5, 6) pouvant être remplies et vidées indépendamment l'une de l'autre respectivement pour la transmission de puissance hydrodynamique par le biais d'un circuit de fluide de travail, et le premier accouplement (4.1) est formé par la première chambre de travail (5) et le second accouplement (4.2) est formé par la seconde chambre de travail (6).

5. Train d'entraînement selon la revendication 4, **caractérisé en ce que** les deux chambes de travail (5, 6) sont disposées dans la direction axiale de l'accouplement hydrodynamique par rapport à l'axe de rotation l'une à côté de l'autre, en particulier avec un rotor commun muni de deux aubages, dans une configuration dos-à-dos, ou bien l'une derrière l'autre dans la direction radiale, l'une encerclant l'autre.

6. Train d'entraînement selon l'une quelconque des revendications 4 ou 5, **caractérisé en ce que** respectivement un aubage oblique des deux accouplements (4.1, 4.2) est prévu dans les deux chambres de travail (5, 6), dans lequel la direction de la position oblique est fixée dans la première chambre de travail (5) opposée à celle de la seconde chambre de travail (6).

7. Train d'entraînement selon la revendication 5, **caractérisé en ce que** les deux chambres de travail (5, 6) sont disposées dans la direction axiale de l'accouplement hydrodynamique par rapport à l'axe de rotation l'une à côté de l'autre, en particulier avec un rotor commun muni de deux aubages, dans une configuration dos-à-dos, et que les moitiés axialement internes respectives des deux chambres de travail (5, 6) ont un diamètre interne plus grand que les deux moitiés axiales externes respectives des deux chambres de travail (5, 6).

8. Train d'entraînement selon l'une quelconque des revendications 1 à 7, **caractérisé en ce que** le second accouplement (4.2) est disposé, en termes de flux de puissance d'entraînement, en série par rapport au premier accouplement (4.1) en liaison motrice entre le moteur à combustion interne (1) et le moteur électrique (2).

9. Train d'entraînement selon l'une quelconque des revendications 1 à 7, **caractérisé en ce que** le second accouplement (4.2) est disposé, en termes de flux de puissance d'entraînement, en série par rapport au premier accouplement (4.1) en liaison motrice entre le moteur à combustion interne (1) et le groupe auxiliaire (3) ou entre le groupe auxiliaire (3) et le moteur électrique (2).

10. Procédé d'utilisation d'un train d'entraînement selon l'une des revendications 1 à 9, comprenant les étapes suivantes :
dans un premier mode d'exploitation, la liaison motrice entre le moteur à combustion interne (1) et le groupe auxiliaire (3) est produite à l'aide du premier accouplement (4.1) ou bien à l'aide des deux accouplements (4.1, 4.2) simultanément et le groupe auxiliaire (3) est entraîné à l'aide du moteur à combustion interne (1);
dans un deuxième mode d'exploitation, la liaison motrice entre le moteur électrique (2) et le groupe auxiliaire (3) est produite à l'aide du second accouplement (4.2) ou bien à l'aide des deux accouplements (4.1, 4.2) simultanément et le groupe auxiliaire (3) est entraîné à l'aide du moteur électrique (2);
dans un troisième mode d'exploitation, la liaison motrice entre le moteur à combustion interne (1) et le moteur électrique (2) est produite à l'aide du premier accouplement (4.1) et/ou du second accouplement (4.2) et le moteur électrique (3) est entraîné sur générateur à l'aide du moteur à combustion interne (1) ou bien le moteur à combustion interne (1) est entraîné à l'aide du moteur électrique (2).

11. Procédé selon la revendication 10, **caractérisé en ce que** dans le troisième ou un quatrième mode d'exploitation, le moteur à combustion interne (1) est démarré à l'aide du moteur électrique (2) en tant que démarreur électrique.

12. Procédé selon l'une des revendications 10 ou 11, **caractérisé en ce que** dans des modes d'exploitation sélectionnés, dans lesquels le moteur à combustion interne (1) fonctionne sur la base d'une contrainte minimale appliquée à celui-ci et que celui-ci va provoquer en un point de travail de ses caractéristiques moteur avec un degré d'efficacité relativement minime, à l'aide du moteur électrique (2), en fonctionnement sur générateur, une contrainte supplémentaire est appliquée au moteur à combustion interne (1) en produisant une liaison motrice entre le moteur à combustion interne (1) et le moteur électrique (2) à l'aide du premier accouplement (4.1) et/ou du second accouplement (4.2) et ainsi le point de travail du moteur à combustion interne (1) est décalé en termes de caractéristiques moteur vers un point présentant un degré d'efficacité compartivement plus élevé.
